# FASCICULE DE BREVET EUROPEEN

(11) **EP 1 625 241 B1**
(45) Date de publication et mention de la délivrance du brevet: **20.05.2009**
(21) Numéro de dépôt: 04724309.2
(22) Date de dépôt: 30.03.2004
(51) Int. Cl.: C22B 21/00, F27B 7/20, F27B 3/28, F27B 7/42

(54) **PROCEDE DE TRAITEMENT D ALUMINIUM DANS UN FOUR**
VERFAHREN ZUR BEHANDLUNG VON ALUMINIUM IN EINEM OFEN
METHOD FOR THE TREATMENT OF ALUMINUM IN A FURNACE

(30) Priorité: 30.04.2003 FR 0305373
(43) Date de publication de la demande: 15.02.2006
(73) Titulaire: L'AIR LIQUIDE, Société Anonyme pour l'Etude et l'Exploitation des Procédés Georges Claude, 75007 Paris (FR)
(72) Inventeur: ALLEMAND, Bruno, 59250 Dunkerque (FR); VUILLERMOZ, Jean-Claude, F-78000 Versailles (FR)
(74) Mandataire: Vesin, Jacques
(86) Numéro de dépôt international: PCT/FR2004/050134
(87) Numéro de publication internationale: WO 2004/099453

(56) Documents cités:
- EP-A- 0 962 540
- EP-A- 1 243 663
- WO-A-02/20859
- US-A- 5 563 903
- US-B1- 6 247 416
- PATENT ABSTRACTS OF JAPAN vol. 009, no. 271 (C-311), 29 octobre 1985 (1985-10-29) -& JP 60 121235 A (FURUKAWA DENKI KOGYO KK), 28 juin 1985 (1985-06-28)
- PAGET M W ET AL: "A novel burner retrofit used to increase productivity in an aluminium rotary furnace" INTERNATIONAL SYMPOSIUM RECYCLING OF METALS AND ENGINEERED MATERIALS, XX, XX, 1990, pages 671-678, XP002089284
- MIHALCEA R M ET AL: "DIODE LASER SENSOR FOR MEASUREMENTS OF CO, CO2, AND CH4 IN COMBUSTION FLOWS" APPLIED OPTICS, OPTICAL SOCIETY OF AMERICA,WASHINGTON, US, vol. 36, no. 33, 20 novembre 1997 (1997-11-20), pages 8745-8752, XP000725233 ISSN: 0003-6935
- DOCQUIER N ET AL: "Combustion control and sensors: a review" PROGRESS IN ENERGY AND COMBUSTION SCIENCE, ELSEVIER SCIENCE PUBLISHERS, AMSTERDAM, NL, vol. 28, no. 2, 2002, pages 107-150, XP004332227 ISSN: 0360-1285

## Description

La présente invention concerne un procédé de traitement d'aluminium dans un four dans lequel on introduit dans le four au moins un matériau contenant de l'aluminium et éventuellement un ou plusieurs sels et/ou du laitier et/ou des crasses recyclées, on réalise la fusion de ce matériau par apport de chaleur à l'aide d'au moins un brûleur alimenté en comburant et en combustible, de manière à obtenir de l'aluminium fondu éventuellement recouvert d'un laitier comportant notamment de l'alumine, et on mesure la concentration en monoxyde de carbone (COₘ) et/ou en hydrogène (H₂ₘ) dans l'atmosphère du four ou dans les fumées en sortie du four.

Dans le domaine de la fusion de l'aluminium secondaire, on réalise celle-ci dans un four rotatif ou un four dit à réverbération. Bien que ce procédé de fusion puisse être continu, la fusion est le plus souvent réalisée en discontinu : les matériaux sont chargés dans le four, en un ou plusieurs cycles successifs avant de couler le métal fondu vers son lieu d'utilisation. Pour cela, le métal fondu doit avoir une température d'environ 740°C. Au-delà de 750°C, la vitesse d'oxydation de l'aluminium fondu augmente considérablement, de manière presque exponentielle.

Au cours d'un cycle de fusion, on peut d'abord distinguer la période initiale, lorsque les matériaux sont solides, qui permet l'absorption d'une grande quantité de chaleur, la fusion de l'aluminium ayant lieu à environ 660°C.

Quelque soit le type de four utilisé, on constate l'existence d'un laitier ou de « crasses » à la surface du métal liquide, qui est un mélange de sels (si celui-ci utilise des sels), d'oxyde d'aluminium et d'aluminium emprisonné dans l'oxyde.

Ce laitier ou ces crasses représentent une quantité de métal perdu ou oxydé encore appelés « pertes au feu » qui représentent une perte de matière non négligeable pour le producteur d'aluminium et qu'il convient de réduire au minimum afin d'augmenter la rentabilité du procédé de fusion. Pour réduire cette oxydation, il est connu de maintenir la température du bain d'aluminium fondu à une valeur inférieure à environ 750°C. Mais cette méthode reste empirique car des points chauds peuvent apparaître à la surface engendrant des oxydations localisées.

D'autres solutions connues visent à éviter l'oxydation en réduisant le contact de la surface du métal avec un oxydant.

Ainsi la demande de brevet JP 58-227706 publiée sous le no. JP-60-121235 (1985) propose d'utiliser la mesure des teneurs en CO et en H2 contenus dans les fumées pour s'assurer que, sur un four de fusion de métaux non-ferreux, les brûleurs installés fonctionnent en mode sous-stoechiométrique dans une plage de valeurs du rapport du débit d'oxydant au débit de combustible allant de 95 à 100 %.

Le document EP 962 540 décrit un procédé de combustion en vue de la fusion d'un métal dans un four, dans lequel un gaz riche en oxygène est envoyé dans le four, au-dessus de la flamme d'un brûleur, au contact du métal liquide.

Le brûleur fonctionnant en sous-stoechiométrie, produit une flamme réductrice qui fait écran entre le gaz riche en oxygène et la surface du métal fondu.

Le document US 5 563 903 décrit un procédé dans lequel un gaz neutre ou réducteur fait écran entre la surface du métal aluminium fondu et une zone de combustion située dans la partie supérieure du four.

Le document US 3 759 702 décrit un procédé dans lequel la fusion a lieu initialement à l'air libre, avec un brûleur mobile au-dessus de la surface des matériaux à fondre. La flamme du brûleur est légèrement sous-stoechiométrique, donc réductrice.

Toutes les méthodes donnent des résultats approximatifs et sont appliquées pendant toute la durée de la fusion et pas uniquement lorsqu'il existe un risque d'oxydation de l'aluminium, car cette connaissance fait défaut à l'homme de métier à ce jour.

Le procédé selon l'invention permet de résoudre le problème posé et réduire la formation d'oxydes d'aluminium.

Il est caractérisé en ce que le comburant qui alimente au moins un brûleur comporte plus de 10 % vol. d'oxygène, de préférence au moins 21 % vol. O₂, et en ce que le procédé comporte une phase finale de réduction de l'oxydation de l'aluminium au cours de laquelle le débit de comburant est sensiblement constant tandis que le débit de combustible injecté dans au moins un brûleur est fonction de la concentration en monoxyde de carbone métaloxyde (COₘₒ) et/ou en hydrogène métaloxyde (H₂ₘₒ) dans l'atmosphère ou les fumées, ou vice-versa, cette concentration en monoxyde de carbone métaloxyde (COₘₒ) et/ou en hydrogène métaloxyde (H₂ₘₒ) étant calculée comme étant la différence entre la concentration mesurée de l'espèce ((COₘ) et/ou (H₂ₘ)) et la concentration intrinsèque en espèce CO ou H₂ engendrée par la combustion du combustible et du comburant y compris les entrées d'air dans le four avec ledit au moins un brûleur mais en l'absence de charge. (La concentration intrinsèque en CO et H₂ doit bien entendu tenir compte d'une part de la combustion du combustible avec le comburant fourni au brûleur, mais également avec le comburant qui est fourni dans le four par les entrées d'air de celui-ci dans ledit four et qui réagit avec ledit combustible).

De préférence, le comburant comporte plus de 88 % vol. en O₂, de préférence plus de 95 % vol. en O₂. Plus préférentiellement le comburant est de l'oxygène industriellement pur.

Le combustible peut être un hydrocarbure quelconque ou un fioul léger ou lourd (avec un système de pulvérisation de fioul adapté dans le brûleur) : de préférence on utilise le gaz naturel, le méthane, le propane, etc... Le rapport volumique oxygène sur combustible est maintenu entre 1 et 5, de préférence entre 1,5 et 3.

Selon une variante de l'invention, la concentration (COₘₒ) en CO métaloxyde et/ou (H₂ₘₒ) en H₂ métaloxyde est maintenue sensiblement constante pendant toute cette phase de réduction d'oxydation à une valeur comprise entre 1 % et 8 % vol., de préférence entre 2 % et 5 % vol. et plus préférentiellement à environ 3 % vol.

En général, la phase de réduction d'oxydation est précédée par une phase de combustion des hydrocarbures au cours de laquelle sensiblement tous les produits organiques présents dans le matériau sont détruits par pyrolyse, suivie éventuellement (mais non nécessairement) par une phase de stabilisation.

De préférence, la phase de combustion des hydrocarbures se termine lorsque la valeur de (COₘ) se stabilise à la valeur de consigne imposée tandis que la phase de stabilisation se déroule à une concentration constante de (COₘ) et une concentration en oxygène dans le comburant sensiblement constante également. (La phase dite de stabilisation lorsqu'elle existe correspond à une phase au cours de laquelle les matériaux solides ne sont pas tous encore fondus tandis que tous les produits organiques ont été détruits).

La phase de réduction d'oxydation de l'aluminium se termine par réintroduction dans la four d'une nouvelle charge de matériau contenant de l'aluminium, ou bien par la coulée d'aluminium liquide vers son point d'utilisation.

Le matériau contenant de l'aluminium dans le cadre de l'invention pourra être notamment, par exemple de l'aluminium en lingot, des copeaux de tournage de pièces en aluminium, des boîtes de boissons, de conserves, des rebuts, des chutes de production, des crasses, du laitier contenant de l'aluminium, et d'une manière générale tout matériau contenant de l'aluminium. Bien entendu, l'invention s'applique également aux fours de maintien en température de l'aluminium liquide.

L'invention sera mieux comprise à l'aide des exemples de réalisation suivants, donnés à titre d'exemple non limitatif, conjointement avec les figures qui représentent :
- la figure 1, une vue schématique d'un four avec un seul brûleur représenté, l'analyse des fumées et le contrôle du brûleur ;
- la figure 2, un relevé schématique des concentrations en CO et H₂ en fonction du temps au cours de deux fusions successives d'aluminium dans un four rotatif, selon l'art antérieur, sans régulation de (CO) et/ou (H₂).
- la figure 3, un graphique explicitant les variations de (CO) et/ou (H₂) en fonction du temps illustrant les trois phases (ou sous-phases) du procédé selon l'invention ;
- la figure 4, une courbe de variation des concentrations en monoxyde de carbone mesuré (COₘ), en monoxyde de carbone métaloxyde et en monoxyde de carbone intrinsèque du brûleur associé au four, mais en l'absence de métal au cours de la phase finale de chaque fusion d'aluminium, en fonction du rapport volumique O₂/GN dans le brûleur.

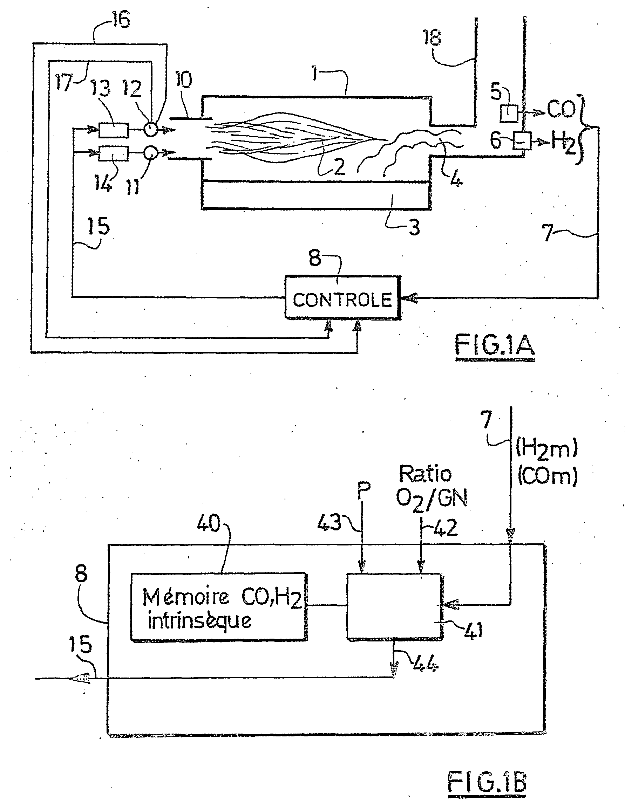

La figure 1A est une vue schématique d'un four 1 (vu en coupe) et du système de contrôle selon l'invention et la figure 1 B un détail du contrôle (exemple).

Un brûleur 10 crée une flamme 2 qui chauffe et fond le métal 3, sous forme liquide. Les fumées 4 issues du four 1 et résultant de la combustion, notamment du brûleur sont évacuées par le conduit 18, dans lequel sont placés des détecteurs 5 et 6 (connues en soi) de CO et/ou de H₂ respectivement permettant de mesurer la concentration en CO et/ou H₂ dans lesdites fumées. Le signal issu de chacun des détecteurs 5 et 6 est transmis par l'intermédiaire de la ligne de connexion à un ensemble de contrôle 8 dont le fonctionnement sera expliqué ci-après. Le brûleur 10 est alimenté respectivement en comburant 13 et combustible 14 par l'intermédiaire de vannes commandées (débitmètres massiques, par exemple) respectivement 12 et 11 permettant de délivrer un débit adapté de comburant et de combustible au brûleur. Ce débit est commandé par le dispositif de contrôle 8, par l'intermédiaire de la ligne de connexion 15. Les lignes de connexion 17 et 16 transmettent la mesure de l'ouverture des vannes 12 et 11 au système de contrôle 8, qui reçoit également une information de température du métal fondu 3 par l'intermédiaire d'un capteur. Comme on le verra ci-après sur la figue 1B, le système de contrôle 8 comporte un réglage du point de consigne de la concentration en CO (et/ou H₂).

Selon que la mesure de la concentration en CO et/ou H₂ transmise par les capteurs 5 et/ou 6 au dispositif de contrôle 8 est supérieure ou inférieure audit point de consigne, celui-ci engendre un signal de commande via la connexion 15 aux vannes commandées 12 et 11 qui régulent l'injection du comburant 13 et du combustible 14 pour obtenir une réduction ou une augmentation de la concentration en monoxyde de carbone et/ou hydrogène dans les fumées. Le système de contrôle 8 est décrit plus en détails sur la figue 1B. Il comporte une mémoire de lecture 40, dans laquelle on enregistre les concentrations en (CO) et/ou H₂ intrinsèques au brûleur et/ou au four. La table de ces valeurs correspond aux différents rapports comburant/combustible et aux différentes puissances de brûleurs, pour le four utilisé (entrées d'air). La mémoire 40 peut être lue par le processeur 41 qui reçoit également les informations sur la puissance P du brûleur utilisé via la connexion 43 et sur le rapport comburant/combustible (ratio O₂/GN) via la connexion 42. L'information de commande aux vannes ou débitmètres 13, 14 est issue du processeur 41 via la connexion 44 et la ligne de commande 15.

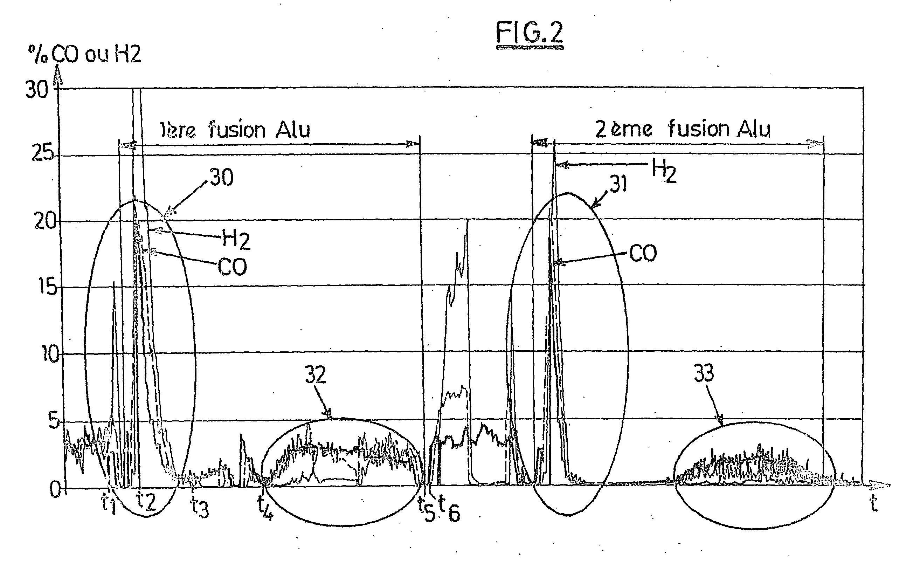

Le fonctionnement de ce système de contrôle et donc du procédé selon l'invention sera mieux compris à l'aide des figures 2 à 4.

Sur la figure 2 sont représentées les variations de concentration en CO ou H₂ dans les fumées en sortie de four, en fonction du temps, sans mise en oeuvre de l'invention, c'est-à-dire sans régulation de la combustion en fonction du CO métaloxyde.

Le four de fusion d'aluminium est chargé initialement avec une charge de matériaux contenant de l'aluminium tels que des rebuts d'aluminium, récupération, etc... et éventuellement des sels qui vont créer une couche fondue de sels au-dessus de la surface de métal fondu, protégeant ainsi cette surface de l'oxydation.

Sur la figure 2, la fin de l'enfournement de cette charge intervient à l'instant t1. A cet instant, on détecte dans les fumées issues du four une concentration en CO et une concentration en H₂ qui sont faibles (environ 0.03 selon l'échelle utilisée sur cette figure) et qui correspondent aux gaz de combustion de la flamme uniquement (une flamme idéalement par la combustion d'un hydrocarbure - de type CH₄ - avec de l'oxygène donne naissance à un mélange de CO₂ et de H₂O si la combustion est complète).

En pratique, ladite combustion n'est jamais complète et donne également naissance à de l'hydrogène H₂ et du monoxyde de carbone CO.

Dès que la température de la charge augmente, les produits organiques contenus dans celle-ci vont rapidement brûler et engendrer la création de CO et H₂ additionnels, outre les produits de combustion complète H₂O et CO₂. Ceci se traduit par un pic de concentration 30 en CO et H₂ rapidement atteint à l'instant t₂ sur la figure.

Le pic de concentration 30 diminue alors rapidement du fait de la pyrolyse rapide de produits organiques et à l'instant t₃ cette concentration est devenue très faible et reste très faible jusqu'à l'instant t₄ où elle augmente jusqu'à une valeur du même ordre que celle qu'elle avait avant l'introduction de la charge. La fin de la phase dite fusion de la charge a lieu à l'instant t₅. Après cette première fusion, on réalise la fusion d'une deuxième charge d'aluminium : l'ouverture de la porte du four à l'instant t₆ provoque des perturbations dans la composition de l'atmosphère au-dessus du bain, visibles sur la figure 2, avant un nouveau pic de H₂ et CO dû à la combustion des produits organiques.

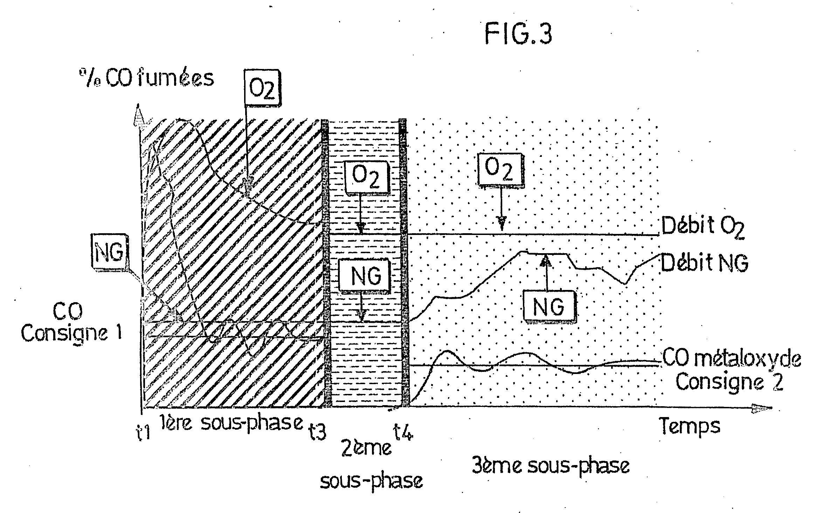

La figure 3 illustre les différentes sous-phases (de chaque différente phase de première fusion, deuxième fusion, etc... du procédé selon l'invention : sur cette figure on a représenté la concentration de CO dans les fumées de sortie du four en fonction du temps. Les instants t₁, t₃ et t₄ ont la même signification que sur la figure 2. La courbe se réfère à une concentration en CO. On obtiendrait une courbe similaire en prenant pour paramètre la concentration en hydrogène dans les fumées. La première phase de la première fusion aluminium se situe entre les instants t₁ et t₃ environ. Dans cette phase, l'introduction d'une charge de matériaux contenant de l'aluminium fait brusquement croître la concentration en CO dans l'atmosphère au-dessus du bain de métal et donc dans les fumées. En effet la matière organique (graisses, etc...) contient pour l'essentiel des éléments carbone et des éléments hydrogène qui réagissent avec l'oxygène disponible dans l'atmosphère pour engendrer du CO, du CO₂, de l'hydrogène et de la vapeur d'eau. Cet apport supplémentaire de combustible nécessite donc un apport d'oxygène complémentaire si l'on veut faire diminuer rapidement la concentration en CO dans l'atmosphère et la ramener à la valeur de consigne « CO consigne 1 ». (le fait de ramener la concentration en CO et/ou H₂ à cette valeur de consigne plus faible permet en fait de faire réagir ledit CO et/ou H₂ avec de l'oxygène contenu dans l'atmosphère et donc d'apporter de l'énergie dans le four, sans consommer de combustible GN supplémentaire). Le débit de combustible NG peut donc rester constant tandis que le débit de comburant (contenant de l'oxygène en plus moins grande quantité) augmente et passe par un pic (légèrement décalé par rapport au pic de CO, du fait de la boucle de régulation) puis redescend à sa valeur initiale I. Lorsque le débit d'oxygène est revenu à sa valeur initiale I, on sait que la première étape de pyrolyse des produits organiques de la charge introduite est terminée.

A l'instant t₃ commence donc la phase dite de stabilisation au cours de laquelle les injections de combustible GN et de comburant O₂ (dans le brûleur) sont réalisées à débit constant, apportant ainsi une puissance constante à la charge et développant une atmosphère de préférence non oxydante ou peu oxydante au-dessus du bain fondu.

Selon l'invention, on pilote le brûleur en fonction de l'oxydation de l'aluminium, relevée dans le four, selon le procédé décrit ci-après.

L'aluminium réagit avec les gaz de combustion du brûleur suivant les réactions suivantes :

2 Al + 3 CO₂ → Al₂O₃ + 3CO (appelé ci-après CO métaloxyde)

2 Al + 3 H₂O → Al₂O₃ + 3H₂ (appelé ci-après H₂ métaloxyde)

2 Al + 3/2 O₂ → Al₂O₃

L'apparition, toutes choses égales par ailleurs, de monoxyde de carbone ou d'hydrogène dans les fumées du four, ou la variation de la concentration en monoxyde de carbone ou d'hydrogène dans les fumées, permet de détecter l'oxydation de l'aluminium.

Pour cela, le rapport Comburant / Combustible fournis au brûleur, appelé RCC, est piloté en fonction de l'oxydation détectée, avec le Comburant qui est un fluide contenant de l'oxygène, par exemple de l'air ou de l'oxygène pur ou de l'air enrichi en oxygène, et le Combustible qui est un fluide contenant des matières susceptibles de réagir avec l'oxygène contenu dans le comburant pour dégager de l'énergie, comme par exemple du gaz naturel, du fioul, du charbon...

Pour réaliser ce pilotage, les émissions de CO et/ou d'H₂ du brûleur (placé dans le four, en l'absence de charge à chauffer, afin de tenir compte des entrées d'air, cet air réagissant avec le CO et H₂ présents dans l'atmosphère du four) sont mesurées pour plusieurs rapports Comburant / Combustible afin de déterminer la corrélation entre les compositions caractéristiques des fumées dans le four et le réglage du brûleur. Ainsi, pour chaque RCC, le taux de CO et de H₂ dans les fumées, lorsque le brûleur fonctionne mais en l'absence de charge à chauffer, sont connus et sont appelés respectivement concentration intrinsèque en CO et concentration intrinsèque en H₂. L'ensemble de ces données stockées dans la mémoire 40 (fig. 1B) reliée à un microprocesseur 41 qui reçoit par ailleurs les informations de puissance P du brûleur, du rapport « Ratio O₂/GB » comburant/combustible et autres paramètres nécessaires tels que la mesure de (H₂m) ou de (COₘ) provenant de 7 et qui délivre en 44 un signal proportionnel (ou fonction de) la valeur de (COₘₒ) ou de (H₂ₘₒ), via la ligne de commande 15 aux débitmètres 13 et 14. L'analyse des fumées est réalisée en continu par un moyen adapté, comme par exemple un système d'extraction pour prélèvement d'un échantillon pour analyse ou un système de mesure par absorption d'un rayonnement émis par une diode laser (pour le CO), pour au moins une des espèces CO ou H₂, la valeur mesurée est appelée COₘ ou H₂ₘ, pour désigner la concentration totale en CO ou en H₂ des fumées.

Le RCC est alors piloté pour maintenir la différence (COₘ - COintrinsèque) ou (H₂ₘ - H ₂intrinsèque) sous le niveau recherché (valeur de consigne du CO ou du H₂ métaloxyde). (Les différences COₘ - COintrinsèque ou H₂ₘ - H ₂intrinsèque sont respectivement appelées « CO métaloxyde » (COₘₒ) ou « H₂ métaloxyde » (H₂ₘₒ), car ils sont créés par une réaction chimique entre l'aluminium et les gaz de l'atmosphère du four).

Selon l'invention, on pilote le RCC en fonction de la concentration calculée à chaque instant de CO métaloxyde et/ou d'hydrogène métaloxyde, ces concentrations étant le reflet de l'oxydation de l'aluminium.

Ainsi, dans la 1^{ère} sous-phase (fig. 3), le débit de combustible GN est constant, le débit de comburant O₂ étant fonction du CO total mesuré (stabilisation de la valeur de consigne).

Pendant la 2^{nde} sous-phase, les débits GN et O₂ sont régulés sur des points respectifs, sans tenir compte de la mesure de concentration en CO dans les fumées de consigne.

Durant la 3^{ème} sous-phase, le débit O₂ est constant et le débit GN est fonction du CO métaloxyde, calculé par différence entre le CO mesuré et la valeur du CO intrinsèque du brûleur pour le RCC du brûleur, cette valeur étant mise en mémoire dans le contrôle 8.

En général, le changement de sous-phase (aux instants t₃ et t₄) est déterminé par un volume de GN ou un volume d'oxygène injecté dans le four durant la phase considérée. Cette solution peut être préférable à un temps, car le système tient ainsi compte des éventuels arrêts du brûleur.

Le rapport volumique O₂/GN (RCC) est maintenu de préférence dans des limites comprises entre 1,5 et 3 (O₂ indique le volume d'oxygène dans le comburant et GN désigne n'importe quel combustible).

De préférence, sur les sous-phases 1 et 3, le CO et/ou H₂ de consigne CO total pour la 1^{er} sous-phase (consigne 1) et CO métaloxyde sur la 3^{ème} sous-phase (consigne 2) sont paramétrables : par exemple, on pourra utiliser une valeur de consigne pour le CO ou l'hydrogène de l'ordre de 3 % volume.

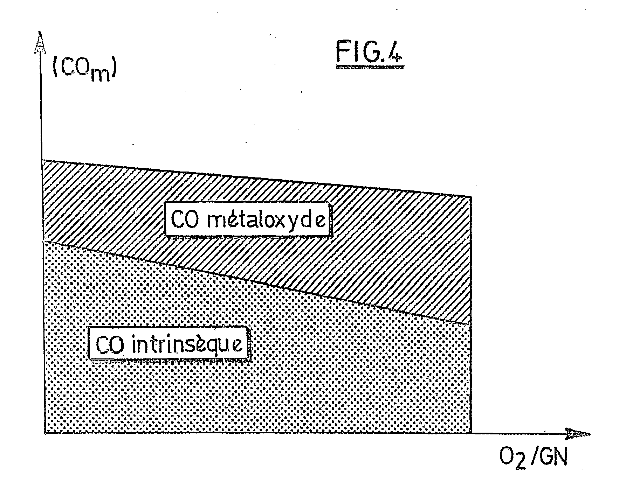

La figure 4 représente schématiquement l'évolution de la concentration en CO total dans les fumées en fonction du rapport volumique RCC O₂/GN utilisé. Ainsi, plus on diminue RCC, plus le CO engendré par le brûleur augmente alors que la part du CO métaloxyde diminue dans le CO total, ce qui montre que l'oxydation de l'aluminium diminue, bien que le CO total augmente.

Une telle conclusion montre bien en quoi l'invention est totalement différente des solution de l'art antérieur puisque, selon l'invention, on n'hésite pas à augmenter la concentration en CO (ou en H₂) dans les fumées pour diminuer l'oxydation et donc la quantité de crasses formées et diminue ainsi les pertes au feu de métal.

Selon une variante de l'invention, on peut (inversement) conserver un débit constant de combustible NG et réaliser une régulation sur l'injection de comburant dans le brûleur. Ceci peut conduire à allonger le temps de cycle, ce qui est défavorable à l'oxydation de l'aluminium. On pourra pour compenser cet effet (plus de puissance thermique nécessaire), utiliser un comburant ayant une plus grande concentration en oxygène, de préférence plus de 88 % d'oxygène. Une autre variante a priori plus compliquée, peut consister à réguler à la fois le débit de comburant et de combustible.

Egalement, selon une autre variante de l'invention, qui peut donner d'aussi bons résultats lorsque les entrées d'air dans le four sont faibles, consiste à négliger ces entrées d'air dans la détermination de la concentration intrinsèque en CO et/ou H₂ et à ne considérer que les espèces CO et H₂ engendrées par le brûleur.

### Exemple de réalisation de l'invention

Tout d'abord, lors d'essais préalables, on charge le four d'environ 65 tonnes de matériaux qui n'émettent pas de composés organiques, ni de CO, ni de H₂ (ou en quantités très négligeables) lors de leur pyrolyse, par exemple du sel (NaCl ou KCI) ou un alliage d'aluminium, dépourvus de laques, peintures, graisses, etc.

Pour chaque puissance du brûleur, et en particulier pour la puissance nominale de fusion, soit 13 MW, on mesure les concentrations de COₘ (et/ou H₂ₘ) en faisant varier le ratio RCC typiquement entre 1,5 et 3.

On obtient ainsi les concentrations intrinsèques de CO (et/ou H₂), qui dépendent essentiellement du réglage du brûleur et des entrées d'air dans le four, et qui seront stockées dans la table de la mémoire 40 pour relecture ultérieure.

Lors de la mise en oeuvre de l'invention sur un chargement en quatre phases tel que décrit plus haut, toutes les phases, excepté la dernière destinée à réchauffer les sels, sont divisées en trois sous-phases : une sous-phase de combustion des organiques, une sous-phase de transition ou stabilisation, et enfin une sous-phase de réduction de l'oxydation. Le changement de sous-phase est déterminé par le cumul de volume de combustible (ici gaz naturel). Les valeurs utilisées sont indiquées dans la table ci-après et sont déterminées lors d'un audit initial du four.

Dans la 1ere sous-phase, la consigne de COₘ est réglée à une valeur de 1 % pour toutes les phases (excepté la dernière).

Dans la sous-phase de stabilisation, en pratique très courte comme l'indique le tableau, les débits de combustible et de gaz naturel sont assignés à des valeurs fixes, le ratio RCC ne varie donc pas. Pour la puissance nominale de 13 MW, le débit de gaz naturel est fixé à 1300 Nm3/h et le débit d'oxygène à 2500 Nm3/h, et ce pour toutes les phases.

Enfin dans la troisième sous-phase de réduction des oxydes, la consigne de CO métaloxyde (COₘₒ) ou de (H₂ₘₒ) est fixée à 1,5 %.
Dans la dernière phase de surchauffe du sel, les paramètres sont réglés comme dans la sous-phase de stabilisation (débits fixés, RCC fixe).

| Phase | Sous-Phase | Plage Cumul GN | Consigne CO | Consigne COₘₒ | Mesure COₘ |
|---|---|---|---|---|---|
| 1.Chargement sel | 1. Organique | 0000-1500 | 1% | - | 1%-7% |
| | 2. Transition | 1500-1600 | - | - | 0,5%-4% |
| | 3. Oxydation | 1600-2550 | - | 1.5% | 2%-5% |
| 2.1^{ere} fusion Alu | 1. Organique | 2550-2800 | 1% | - | 1%-4% |
| | 2. Transition | 2800-2850 | - | - | 0,5% - 2% |
| | 3. Oxydation | 2850-3400 | - | 1.5% | 2%-7% |
| 3. 2^{e} fusion Alu | 1. Organique | 3400-3750 | 1% | - | 1 %-4% |
| | 2. Transition | 3750-3800 | - | - | 0,5%-2% |
| | 3. Oxydation | 3800-4750 | - | 1.5% | 2%-10% |
| 4. Surchauffe Sel | RCC fixe | 4750-5500 | - | - | 0%-2% |

| | | | | | |
|---|---|---|---|---|---|
| Valeurs des paramètres imposés et valeurs typiques de la mesure pour le procédé décrit ci-dessus. (les valeurs des cumuls ne sont valables que pour les quantités chargées indiquées plus haut) | | | | | |

On remarque qu'en fonction d'un certain nombre de paramètres, et notamment de la température de l'aluminium liquide, le COₘ mesuré varie grossièrement entre 2% et 10%. Dans la troisième sous-phase, avant la coulée de l'aluminium (2^{e} Chargement Alu), la régulation selon l'invention impose un ratio de brûleur proche du minimum permis (1,5), et donc un CO intrinsèque élevé (jusqu'à environ 8,5%- 9%), et ce pour garantir une oxydation minimale contrôlée de l'aluminium liquide proche de sa température de coulée.

### Exemple comparatif (art antérieur et invention sur le même four):

Dans un four rotatif équipé d'un brûleur de 13 MW, on réalise le chargement de 27 tonnes de sel et de 27 tonnes de déchets d'aluminium, on chauffe la charge jusqu'à consommation de gaz naturel de 2500 Nm³ (procédé art antérieur) ou de 2550 Nm³ (procédé selon l'invention), puis on charge à nouveau 65 tonnes de déchets d'aluminium et on chauffe la charge jusqu'à consommation de 3300 Nm³ de gaz naturel (art antérieur), ou de 3400 Nm³ (invention). Ensuite, on charge à nouveau 35 tonnes de déchets d'aluminium et on chauffe la charge jusqu'à consommation de 4600 Nm³ de gaz naturel (art antérieur), ou de 4750 Nm³ (invention), on réalise ensuite la coulée de 98 tonnes d'aluminium (art antérieur), et de 99 tonnes d'aluminium (invention), on procède alors au réchauffage des sels et crasses présents dans le four jusqu'à la consommation de 5350 Nm³ de gaz naturel (art antérieur), ou de 5500 Nm³ de gaz naturel (invention). Enfin, on procède à la coulée de l'aluminium restant dans le four : 9 tonnes d'aluminium (art antérieur et invention).

La combustion du brûleur est pilotée selon l'invention grâce à l'analyse du CO mesuré par une diode laser implantée sur le conduit de la cheminée(COₘ). Dans l'art antérieur, on maintient constant le rapport comburant/combustible, ce qui maintient grossièrement constant le CO total si la température est contrôlée.

Les résultats suivants sont alors obtenus (résultats de l'invention dans le cas d'application précédent).

| | Unité | Procédé art antérieur | Procédé selon l'invention |
|---|---|---|---|
| Gaz Naturel consommé | Nm³ | 5350 | 5500 |
| Oxygène consommé | Nm³ | 9900 | 10300 |
| Temps de fusion | mn | 465 | 460 |
| Température de l'aluminium en fin de fusion | °C | 743 | 741 |
| Poids d'aluminium oxydé | kg | 2.750 | 1800 |
| Poids de sel et crasses | tonnes | 30 | 29 |
| Poids d'aluminium produit | tonnes | 107 | 108 |

A noter que les 150 Nm³ de combustible supplémentaires nécessaires dans ce cas pour mettre en oeuvre l'invention constituent un surcoût largement minoritaire par rapport à la valeur de l'aluminium récupéré.

Il convient de mentionner d'autre part que pour certains types de charge à fort contenu en matières organiques l'énergie récupérée lors des premières sous-phases (combustion des organiques) permet de compenser le combustible supplémentaire nécessaire pour les troisièmes sous-phases, de sorte que la consommation globale d'un cycle est égale, voire inférieure par rapport au procédé initial.

## Revendications

1. Procédé de traitement d'aluminium dans un four dans lequel on introduit dans le four un matériau contenant de l'aluminium et éventuellement un ou plusieurs sels, on réalise la fusion de ce matériau par apport, de chaleur à l'aide d'au moins un brûleur alimenté en comburant et en combustible, de manière à obtenir de l'aluminium fondu éventuellement recouvert d'un laitier comportant notamment de l'alumine et au moins un sel, et on mesure la concentration en monoxyde de carbone COₘ et/ou en hydrogène H₂ₘ dans l'atmosphère du four ou dans les fumées en sortie du four, **caractérisé en ce que** le comburant qui alimente au moins un brûleur comporte plus de 10 % volume d'oxygène, de préférence plus de 21 % vol. d'oxygène, et **en ce que** le procédé comporte une phase finale de réduction de l'oxydation de l'aluminium fondu au cours de laquelle le débit de comburant est sensiblement constant tandis que le débit de combustible injecté dans au moins un brûleur est fonction de la concentration en monoxyde de carbone métaloxyde COₘₒ et/ou de l'hydrogène métaloxyde H₂ₘₒ dans l'atmosphère ou les fumées ou vice-versa, cette concentration en monoxyde de carbone métaloxyde COₘₒ et/ou en hydrogène métaloxyde H₂ₘₒ étant calculée comme étant la différence entre la concentration mesurée de l'espèce et la concentration intrinsèque en espèce CO ou H₂ engendré par la combustion du combustible et du comburant y compris les entrées d'air, dans le four avec ledit au moins un brûleur, mais en l'absence de charge dans le four.

2. Procédé selon la revendication 1, **caractérisé en ce que** le comburant comporte plus de 88 % vol. en O₂, de préférence plus de 95 % vol. en O₂.

3. Procédé selon la revendication 1 ou 2, **caractérisé en ce que** le comburant est de l'oxygène industriellement pur.

4. Procédé selon la revendication 1, **caractérisé en ce que** le combustible est choisi parmi le gaz naturel, les hydrocarbures, le fioul léger ou lourd.

5. Procédé selon l'une des revendications 1 à 4, **caractérisé en ce que** le rapport volumique oxygène sur combustible est maintenu entre 1 et 5, de préférence 1,5 et 3.

6. Procédé selon l'une des revendications 1 à 5, **caractérisé en ce que** la concentration en monoxyde de carbone métaloxyde (COₘₒ) et/ou en hydrogène métaloxyde (H₂ₘₒ) est maintenue sensiblement constante pendant toute cette phase de réduction d'oxydation à une valeur comprise entre 1 % et 8 %, de préférence 2 à 5 % vol. et plus préférentiellement environ 3 % vol.

7. Procédé selon les revendications 1 à 6, **caractérisé en ce que** la phase de réduction d'oxydation est précédée par une phase de combustion des hydrocarbures au cours de laquelle sensiblement tous les produits organiques présents dans le matériau sont détruits par pyrolyse.

8. Procédé selon la revendication 7, **caractérisé en ce que** la phase de combustion des hydrocarbures se termine lorsque la valeur mesurée de (CO)ₘ et/ou (H₂)ₘ se stabilise à la valeur de consigne imposée.

9. Procédé selon les revendications 7 et 8, **caractérisé en ce que** la phase de stabilisation se déroule avec une concentration mesurée (CO)ₘ et/ou (H₂)ₘ régulée à une valeur constante, tandis que le débit de comburant dans le brûleur est sensiblement constant.

10. Procédé selon l'une des revendications 1 à 9, **caractérisé en ce que** la phase de réduction d'oxydation de l'aluminium se termine par réintroduction dans la four d'une nouvelle charge de matériau contenant de l'aluminium.

11. Procédé selon l'une des revendications 1 à 10, **caractérisé en ce que** la mesure de (CO)ₘ est réalisée à l'aide d'une diode laser.

12. Utilisation d'une diode laser pour la mesure du CO dans un four d'aluminium afin de piloter la combustion d'au moins un brûleur du four, selon le procédé de l'une au moins des revendications précédentes.

## Claims

1. Method for treating aluminium in a furnace, wherein a material containing aluminium and optionally one or more salts is introduced into the furnace, this material is melted by the input of heat using at least one burner supplied with oxidizer and with fuel, in order to obtain molten aluminium optionally covered with a slag comprising alumina in particular and at least one salt, and the concentration of carbon monoxide COₘ and/or hydrogen H₂ₘ in the furnace atmosphere or in the fuel gases exiting from the furnace is measured, **characterized in that** the oxidizer supplied to at least one burner comprises more than 10% by volume of oxygen, preferably more than 21% by volume of oxygen, and **in that** the method comprises a final phase of reducing the oxidation of the molten aluminium during which the oxidizer flow rate is substantially constant while the flow rate of fuel injected into at least one burner is selected according to the concentration of metal oxide carbon monoxide COₘₒ and/or metal oxide hydrogen H₂ₘₒ in the atmosphere or the flue gases or vice versa, this concentration of metal oxide carbon monoxide COₘₒ and/or metal oxide hydrogen H₂ₘₒ being calculated as the difference between the measured species concentration and the intrinsic CO or H₂ species concentration caused by the combustion of the fuel and the oxidizer, air inlets included, in the furnace with said at least one burner, but in the absence of a charge in the furnace.

2. Method according to Claim 1, **characterized in that** the oxidizer comprises more than 88% by volume of O₂, preferably more than 95% by volume of O₂,

3. Method according to either of Claims 1 and 2, **characterized in that** the oxidizer is industrially pure oxygen.

4. Method according to Claim 1, **characterized in that** the fuel is selected from natural gas, hydrocarbons, and light or heavy fuel oil.

5. Method according to one of Claims 1 to 4, **characterized in that** the volumetric ratio of oxygen to fuel is maintained between 1 and 5, preferably between 1.5 and 3.

6. Method according to one of Claims 1 to 5, **characterized in that** the concentration of metal oxide carbon monoxide (COₘₒ) and/or of metal oxide hydrogen (H₂ₘₒ) is kept substantially constant throughout this oxidation reduction phase at a value of between 1% and 8%, preferably between 2% and 5% by volume and more preferably of about 3% by volume.

7. Method according to Claims 1 to 6, **characterized in that** the oxidation reduction phase is preceded by a hydrocarbon combustion phase during which substantially all the organic products present in the material are destroyed by pyrolysis.

8. Method according to Claim 7, **characterized in that** the hydrocarbon combustion phase terminates when the measured value of (CO)ₘ and/or (H₂)ₘ stabilizes at the imposed setpoint value.

9. Method according to either of Claims 7 and 8, **characterized in that** the stabilization phase takes place with a measured (CO)ₘ and/or (H₂)ₘ concentration regulated at a constant value, while the flow rate of oxidizer in the burner is substantially constant.

10. Method according to one of Claims 1 to 9, **characterized in that** the aluminium oxidation reduction phase terminates with the reintroduction of a new charge of material containing aluminium into the furnace.

11. Method according to one of Claims 1 to 10, **characterized in that** (CO)ₘ is measured using a laser diode.

12. Use of a laser diode to measure CO in an aluminium furnace in order to control the combustion of at least one burner of the furnace, according to the method of at least one of the preceding claims.

## Patentansprüche

1. Verfahren zur Behandlung von Aluminium in einem Ofen, wobei der Ofen mit einem Material beschickt wird, das Aluminium und möglicherweise ein oder mehrere Salze enthält, und das Material geschmolzen wird, indem mittels mindestens eines Brenners, der mit Sauerstoffträger und Brennstoff versorgt wird, Wärme zugeführt wird, sodass geschmolzenes Aluminium erhalten wird, das möglicherweise mit einer Schlacke bedeckt ist, die insbesondere Aluminiumoxid und mindestens ein Salz enthält, und die Konzentration an Kohlenmonoxid COₘ und/oder an Wasserstoff H₂ₘ in der Ofenatmosphäre oder in den Ofenabgasen gemessen wird, **dadurch gekennzeichnet, dass** der Sauerstoffträger, mit dem mindestens ein Brenner versorgt wird, mehr als 10 Volumen% an Sauerstoff, vorzugsweise mehr als 21 Vol.-% an Sauerstoff, aufweist, und dass das Verfahren eine Endphase zur Reduzierung der Oxidation des geschmolzenen Aluminiums aufweist, im Laufe derer die Flussrate des Sauerstoffträgers im Wesentlichen konstant ist, während die Flussrate des Brennstoffs, der in mindestens einen Brenner eingespritzt wird, von der Konzentration an Kohlenmonoxid-Metalloxid COₘₒ und/oder an Wasserstoff-Metalloxid H₂ₘₒ in der Atmosphäre oder den Abgasen abhängt oder umgekehrt, wobei diese Konzentration an Kohlenmonoxid-Metalloxid COₘₒ und/oder an Wasserstoff-Metalloxid H₂ₘₒ als Differenz zwischen der gemessenen Konzentration der Spezies und der intrinsischen Konzentration der Spezies CO oder H₂, erzeugt innerhalb des Ofens mit dem mindestens einen Brenner durch die Verbrennungsreaktion des Brennstoffs und des Sauerstoffträgers einschließlich einströmender Luft, wobei der Ofen jedoch keine Charge enthält, berechnet wird.

2. Verfahren nach Anspruch 1, **dadurch gekennzeichnet, dass** der Sauerstoffträger mehr als 88 Vol.-% an O₂, vorzugsweise mehr als 95 Vol.-% an O₂, aufweist.

3. Verfahren nach Anspruch 1 oder 2, **dadurch gekennzeichnet, dass** es sich bei dem Sauerstoffträger um Sauerstoff von technischer Reinheit handelt.

4. Verfahren nach Anspruch 1, **dadurch gekennzeichnet, dass** der Brennstoff aus Erdgas, Kohlenwasserstoffen, leichtem oder schwerem Heizöl gewählt ist.

5. Verfahren nach einem der Ansprüche 1 bis 4, **dadurch gekennzeichnet, dass** das Volumenverhältnis von Sauerstoff zu Brennstoff zwischen 1 und 5, vorzugsweise 1,5 und 3, gehalten wird.

6. Verfahren nach einem der Ansprüche 1 bis 5, **dadurch gekennzeichnet, dass** die Konzentration an Kohlenmonoxid-Metalloxid (COₘₒ) und/oder an Wasserstoff-Metalloxid (H₂ₘₒ) während der gesamten Phase zur Oxidationsreduzierung bei einem Wert von 1 bis 8 Vol.-%, vorzugsweise von 2 bis 5 Vol.-% und insbesondere bei ungefähr 3 Vol.-%, im Wesentlichen konstant gehalten wird.

7. Verfahren nach den Ansprüchen 1 bis 6, **dadurch gekennzeichnet, dass** der Phase zur Oxidationsreduzierung eine Phase der Verbrennung der Kohlenwasserstoffe vorangeht, während derer im Wesentlichen alle organischen Stoffe, die in dem Material vorhanden sind, durch Pyrolyse zerstört werden.

8. Verfahren nach Anspruch 7, **dadurch gekennzeichnet, dass** die Phase der Verbrennung der Kohlenwasserstoffe endet, wenn sich der gemessene Wert an (CO)ₘ und/oder (H₂)ₘ beim vorgegebenen Einstellwert stabilisiert.

9. Verfahren nach den Ansprüchen 7 und 8, **dadurch gekennzeichnet, dass** die Stabilisierungsphase derart abläuft, dass die gemessene Konzentration (CO)ₘ und/oder (H₂)ₘ auf einen konstanten Wert reguliert wird, während die Flussrate des Sauerstoffträgers im Brenner im Wesentlichen konstant ist.

10. Verfahren nach einem der Ansprüche 1 bis 9, **dadurch gekennzeichnet, dass** die Phase zur Reduzierung der Oxidation von Aluminium beendet wird, indem der Ofen wieder mit einer neuen Charge des aluminiumhaltigen Materials beschickt wird.

11. Verfahren gemäß einem der Ansprüche 1 bis 10, **dadurch gekennzeichnet, dass** die Messung des (CO)ₘ mit Hilfe einer Laserdiode durchgeführt wird.

12. Verwendung einer Laserdiode zur Messung des CO in einem Aluminiumofen, um die Verbrennungsreaktion mindestens eines Brenners des Ofens zu steuern, und zwar gemäß dem Verfahren nach mindestens einem der vorhergehenden Ansprüche.
